# EUROPEAN PATENT APPLICATION

(11) **EP 4 582 758 A1**
(43) Date of publication of application: **09.07.2025**
(21) Application number: 24741648.0
(22) Date of filing: 08.01.2024
(51) Int. Cl.: F26B 21/00, H01M 4/04, F26B 21/08, F26B 13/14, F26B 25/06

(54) **ELECTRODE DRYING EQUIPMENT AND ELECTRODE DRYING SYSTEM COMPRISING SAME**

(30) Priority: 10.01.2023 KR 20230003506; 03.01.2024 KR 20240000998
(71) Applicant: LG Energy Solution, Ltd., Seoul 07335 (KR)
(72) Inventor: JANG, Woo Sun, Daejeon 34122 (KR); KANG, Tae Won, Daejeon 34122 (KR)
(74) Representative: Plasseraud IP
(86) International application number: PCT/KR2024/000347
(87) International publication number: WO 2024/151027

(57) **Abstract**

Example embodiments provide a drying system including an electrode drying equipment and a dehumidifier. The electrode drying equipment includes a drying chamber, a plurality of forced air supply devices on a top surface of the drying chamber, and a plurality of exhaust ports on a rear surface of the drying chamber, and is configured to dry an electrode. The dehumidifier is connected to the plurality of forced air supply devices, and configured to generate dry air to be provided to the drying chamber through the plurality of forced air supply devices. The dry air generated by the dehumidifier may be directly provided to the forced air supply devices.

## Description

### [Technical Field]

The present invention relates to an electrode drying system. More specifically, the present invention relates to an electrode drying equipment with a forced air supply device and an electrode drying system including the same. The present application claims the benefit of priority based on Korean Patent Application No. 10-2023-0003506, filed on January 10, 2023 and Korean Patent Application No. 10-2024-0000998, filed on January 3, 2024, and the entire contents of the Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, owing to improved energy density and economies of scale, manufacturing costs of electric-powered hybrid electric vehicles (HEVs) and battery electric vehicles (BEVs) have dramatically decreased and a range of BEVs has increased to the same level as that of fuel vehicles, and thus, a main use of secondary batteries is moving from mobile devices to mobility.

Secondary batteries are classified into a lithium ion battery, a lithium ion polymer battery, a lithium polymer battery, etc. according to a configuration of an electrode and an electrolyte. A market share of lithium ion polymer batteries in the field of secondary battery is increasing due to a low possibility of leakage of an electrolyte and easiness in manufacturing.

Secondary batteries are classified into a cylindrical battery in which an electrode assembly is built in a cylindrical metal can, a prismatic battery in which an electrode assembly is built in a prismatic metal can, and a pouch type battery in which an electrode assembly is built in a pouch case of aluminum laminate sheet, according to a shape of a battery case.

An electrode assembly included in a battery case includes a positive electrode, a negative electrode, and a separator interposed between the positive electrode and the negative electrode. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

An electrode drying process is a process of applying an active material to a sheet type positive electrode current collector and negative electrode current collector and removing moisture therefrom before separating the positive electrode current collector and the negative electrode current collector from each other. The yield and reliability of a secondary battery can be improved by uniformly drying all surfaces of electrode sheets.

### [Disclosure]

### [Technical Problem]

The present invention is directed to providing an electrode drying equipment with improved reliability and an electrode drying system including the same.

### [Technical Solution]

Example embodiments of the present invention provide a drying system that includes an electrode drying equipment and a dehumidifier.

The electrode drying equipment includes a drying chamber, a plurality of forced air supply devices on a top surface of the drying chamber, and a plurality of exhaust ports on a rear surface of the drying chamber, and is configured to dry an electrode.

The dehumidifier is connected to the plurality of forced air supply devices, and configured to generate dry air to be provided to the drying chamber through the plurality of forced air supply devices.

The dry air generated by the dehumidifier may be directly provided to the forced air supply devices.

The electrode drying system may further include a plurality of air supply pipes connected to the dehumidifier, and each of the plurality of air supply pipes may be connected to corresponding one among the plurality of forced air supply devices.

The electrode drying system may further include a plurality of air supply fans each installed in one of the plurality of air supply pipes, and each of the plurality of air supply fans may be configured to provide a driving force for delivering the dry air through one of the plurality of air supply pipes.

The electrode drying equipment may further include a plurality of first rollers and a plurality of second rollers provided in the drying chamber and configured to support the electrode, and each of the plurality of first rollers maybe spaced apart from the top surface of the drying chamber with the plurality of second rollers interposed therebetween.

The plurality of second rollers may be interposed between the plurality of first rollers in a direction in which the electrode extends.

The plurality of first rollers and the plurality of second rollers may be configured to support the electrode such that a middle portion of the electrode is elevated compared to an edge portion of the electrode.

The drying chamber may further include a bottom surface opposite to the top surface of the drying chamber, and a distance between each of the plurality of exhaust ports and the top surface of the drying chamber may be less than a distance between each of the plurality of exhaust ports and the bottom surface of the drying chamber.

Each of the plurality of forced air supply devices may not overlap the electrode in a direction perpendicular to the top surface of the drying chamber.

Each of the plurality of forced air supply devices may be interposed between the electrode and a front surface of the drying chamber, and the front surface of the drying chamber may be opposite to the rear surface of the drying chamber.

Each of the plurality of forced air supply devices may include an anemometer, a thermometer, a hygrometer electric damper, or a duct.

The electrode drying system may further include a plurality of passive air supply devices on a front surface of the drying chamber, and the front surface of the drying chamber may be opposite to the rear surface of the drying chamber.

Each of the passive air supply devices may not be connected to the dehumidifier.

Example embodiments provide an electrode drying equipment. The electrode drying equipment includes a drying chamber, a plurality of forced air supply devices on a top surface of the drying chamber, and a plurality of exhaust ports on a rear surface of the drying chamber, in which each of the plurality of forced air supply devices is spaced apart from an electrode loaded in the drying chamber in a direction parallel to the top surface of the drying chamber.

Each of the plurality of air supply devices may not overlap the electrode.

A distance between each of the plurality of forced air supply devices and a front surface of the drying chamber may be less than a distance between each of the plurality of air supply devices and the rear surface of the drying chamber, and the front surface of the drying chamber may be opposite to the rear surface of the drying chamber.

Each of the plurality of forced air supply devices may be interposed between the electrode and the front surface of the drying chamber in a first direction parallel to the top surface of the drying chamber.

The electrode drying equipment may further include a plurality of passive air supply devices configured to supply dry air to the drying chamber, and the plurality of passive air supply devices may be on the front surface of the drying chamber.

The forced air supply devices may be directly connected to a dehumidifier, which is configured to generate dry air, through an air supply pipe.

The passive air supply devices may not be connected to the dehumidifier.

A distance between each of the plurality of exhaust ports and the top surface of the drying chamber may be less than a distance between each of the plurality of exhaust ports and a bottom surface of the drying chamber, and the bottom surface of the drying chamber may be opposite to the top surface of the drying chamber.

Example embodiments provide an electrode drying equipment. The electrode drying equipment includes a drying chamber, a plurality of forced air supply devices on a bottom surface of the drying chamber, and a plurality of exhaust ports on a rear surface of the drying chamber, and each of the plurality of forced air supply devices is spaced apart from an electrode loaded in the drying chamber in a direction parallel to the bottom surface of the drying chamber.

A distance between each of the plurality of forced air supply devices and a front surface of the drying chamber may be less than a distance between each of the plurality of air supply devices and the rear surface of the drying chamber, and the front surface of the drying chamber may be opposite to the rear surface of the drying chamber.

Each of the plurality of forced air supply devices may be interposed between the electrode and the front surface of the drying chamber in a first direction parallel to the rear surface of the drying chamber.

The electrode drying equipment may further include a plurality of passive air supply devices configured to supply dry air to the drying chamber, and the plurality of passive air supply devices may be on the front surface of the drying chamber.

The forced air supply devices may be directly connected to a dehumidifier, which is configured to generate dry air, through an air supply pipe.

The passive air supply devices may not be connected to the dehumidifier.

A distance between each of the plurality of exhaust ports and the bottom surface of the drying chamber may be less than a distance between each of the plurality of exhaust ports and a top surface of the drying chamber, and the top surface of the drying chamber may be opposite to the bottom surface of the drying chamber.

### [Advantageous Effects]

According to example embodiments of the present invention, a moisture mass fraction in a drying chamber can be reduced, and the generation of vortexes and turbulence in the drying chamber can be alleviated. Accordingly, the uniformity and reliability of a drying process using a electrode drying system may improve.
Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a diagram for describing an electrode drying system according to example embodiments.
FIGS. 2 and 3 are diagrams for describing an electrode drying equipment according to example embodiments.
FIG. 4 is a diagram for describing an electrode drying equipment according to other example embodiments.
FIG. 5 is a diagram for describing an electrode drying equipment according to other example embodiments.
FIG. 6 is a flowchart of a method of manufacturing an electrode according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

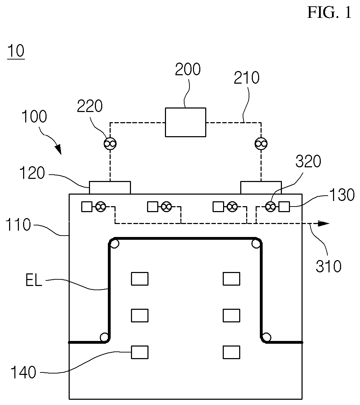

FIG. 1 is a diagram for describing an electrode drying system 10 according to example embodiments.

Referring to FIG. 1, the electrode drying system 10 may include an electrode drying equipment 100, a dehumidifier 200, a plurality of air supply pipes 210, a plurality of air supply fans 220, a plurality of exhaust pipes 310, and a plurality of exhaust fans 320.

The electrode drying system 10 may be configured to perform a drying process on an electrode EL. The electrode EL may be used to manufacture a secondary battery. The electrode EL may be a positive electrode or a negative electrode. The positive electrode includes a positive electrode current collector and a positive electrode active material applied to the positive electrode current collector, and the negative electrode includes a negative electrode current collector and a negative electrode active material applied to the negative electrode current collector.

The drying process may include loading the electrode EL in the drying chamber 110 and then supplying dry air into the drying chamber 110. The drying process may be performed based on temperature control and dew point control inside the drying chamber 110. The drying process may include maintaining a temperature and a dew point in the drying chamber 110 to be within set ranges according to values measured by a temperature sensor and a dew point sensor installed inside the drying chamber 110. For example, a dew point in the drying chamber 110 may be maintained to be about -70 °C or less but is not limited thereto. In the drying process, the dew point in the drying chamber 110 may be in a range of about -20 °C to about -70 °C.

The dehumidifier 200 may be configured to generate dry air by removing pollutants and moisture from outside air. The dry air generated by the dehumidifier 200 may be distributed to each of parts and components of the electrode drying system 10 as needed. The electrode drying system 10 may include an environment control unit, and the environment control unit may control an atmosphere in the electrode drying system 10 using dry air generated by the dehumidifier 200.

The dehumidifier 200 may be connected to a plurality of forced air supply devices 120 of the electrode drying equipment 100 through the plurality of air supply pipes 210. According to example embodiments, the plurality of forced air supply devices 120 may be connected directly to the dehumidifier 200 through the plurality of air supply pipes 210. Each of the plurality of air supply pipes 210 may be connected to the dehumidifier 200 and corresponding one among the plurality of forced air supply devices 120.

In FIG. 1, connections between the plurality of air supply pipes 210 and the plurality of exhaust pipes 310 are indicated by dashed lines.

Each of the plurality of air supply pipes 210 may provide a passage for the movement of the dry air generated by the dehumidifier 200. The dry air generated by the dehumidifier 200 may be provided to the plurality of forced air supply devices 120 through the plurality of air supply pipes 210. Accordingly, even when a moisture source such as a operator is located in the electrode drying system 10, the dry air generated by the dehumidifier 200 is directly provided to the drying chamber 110 through the forced air supply devices 120, thus improving uniformity and reliability of the drying process.

The plurality of air supply fans 220 may be installed in the plurality of air supply pipes 210. Each of the plurality of air supply fans 220 may be configured to provide a driving force to move dry air through the plurality of air supply pipes 210. Each of the plurality of air supply fans 220 may be configured to adjust a flow rate of the dry air through the plurality of air supply pipes 210.

Air inside the drying chamber 110 may be discharged through a plurality of exhaust ports 130. Humidity of the air inside the drying chamber 110 may be higher than that of dry air provided from the plurality of forced air supply devices 120 by performing the drying process. The plurality of exhaust ports 130 may discharge the air inside the drying chamber 110 such that an atmosphere (e.g., humidity, temperature, pressure, etc.) inside the drying chamber 110 may be kept constant.

Each of the plurality of exhaust ports 130 may be connected to one of the plurality of exhaust pipes 310. The plurality of exhaust pipes 310 may provide a passage for discharging air inside the drying chamber 110.

Each of the plurality of exhaust fans 320 may be installed on corresponding one of the plurality of exhaust pipes 310. Each of the plurality of exhaust fans 320 may provide a driving force to exhaust air from the drying chamber 110 through the plurality of exhaust pipes 310. Each of the plurality of exhaust fans 320 may adjust a flow rate of air discharged from the plurality of exhaust ports 130.

A plurality of passive air supply devices 140 of the electrode drying equipment 100 may be configured to provide dry air into the drying chamber 110. The plurality of passive air supply devices 140 may provide dry air distributed to the electrode drying system 10 from the dehumidifier 200 into the drying chamber 110.

The plurality of passive air supply devices 140 may not be connected to the dehumidifier 200. The electrode drying system 10 may not include pipes connecting the plurality of passive air supply devices 140 and the dehumidifier 200. The plurality of passive air supply devices 140 may provide dry air into the drying chamber 110 by a suction force provided through the plurality of exhaust ports 130.

The plurality of passive air supply devices 140 may each have a structure that may be opened and closed. When the plurality of passive air supply devices 140 are closed, the flow of air through the plurality of passive air supply devices 140 may be blocked and thus the plurality of passive air supply devices 140 may not provide dry air to the drying chamber 110. When the plurality of passive air supply devices 140 are open, the flow of air through the plurality of passive air supply devices 140 may be permitted and thus the plurality of passive air supply devices 140 may provide dry air to the drying chamber 110.

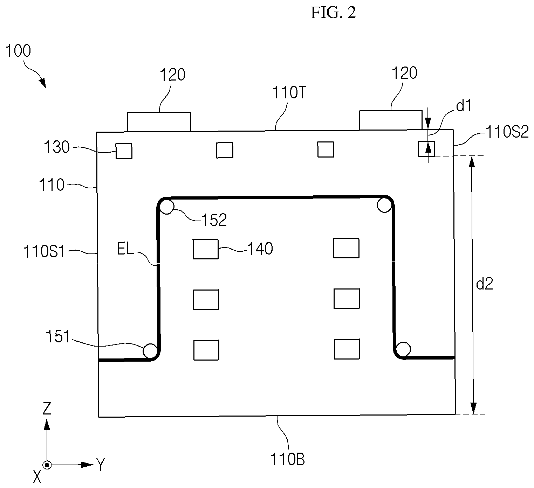

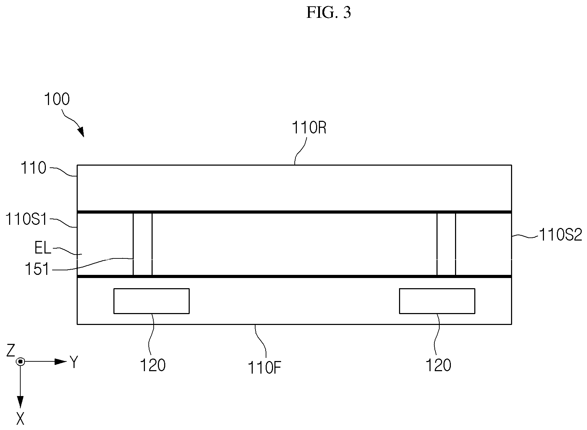

FIGS. 2 and 3 are diagrams for describing an electrode drying equipment 100 according to example embodiments. More specifically, FIG. 2 illustrates the electrode drying equipment 100 viewed from a front 110F of a drying chamber 110, and FIG. 3 illustrates the electrode drying equipment 100 viewed from an top surface 110T of the drying chamber 110.

Referring to FIGS. 2 and 3, the electrode drying equipment 100 may include a plurality of first rollers 151 and a plurality of second rollers 152, in addition to the drying chamber 110, a plurality of forced air supply devices 120, a plurality of exhaust ports 130, and a plurality of passive air supply devices 140 as described above.

The drying chamber 110 may provide a space for a drying process. The drying chamber 110 may isolate an inner space of the drying chamber 110 from the outside. The drying chamber 110 may have a controlled temperature, humidity, and pressure and thus a uniform drying process may be performed on all surfaces of the electrode EL.

The drying chamber 110 may include a front surface 110F, a rear surface 110R, a bottom surface 110B, a top surface 110T, a first side surface 110S1, and a second side surface 110S2. Hereinafter, a direction substantially perpendicular to each of the front surface 110F and the rear surface 110R is defined as an X-axis direction, a direction substantially perpendicular to each of the first and second side surfaces 110S1 and 110S2 is defined as a Y-axis direction, and a direction substantially perpendicular to each of the bottom surface 110B and the top surface 110T is defined as a Z-axis direction. The X-axis direction, the Y-axis direction, and the Z-axis direction may be substantially perpendicular to one another. Unless otherwise defined, the above definitions of the X-axis direction, the Y-axis direction, and the Z-axis direction apply to the following drawings.

The bottom surface 110B may face a bottom of a space in which the drying chamber 110 is installed. The top surface 110T may be opposite to the bottom surface 110B. The top surface 110T may be spaced apart from the bottom of the space, in which the drying chamber 110 is installed, with the bottom surface 110B interposed therebetween. The plurality of forced air supply devices 120 may be installed on the top surface 110T.

Each of the plurality of forced air supply devices 120 may include one of an anemometer, a thermometer, a hygrometer, an electric damper, and a duct. The anemometer may be configured to measure the speed of dry air flowing through each of the plurality of forced air supply devices 120. The thermometer may be configured to measure a temperature of the dry air flowing through each of the forced air supply devices 120. The hygrometer may be configured to measure absolute humidity of the dry air flowing through each of the forced air supply devices 120. The hygrometer may measure relative humidity of the dry air flowing through each of the forced air supply devices 120. The electric damper may be configured to adjust a flow rate of the dry air flowing through each of the forced air supply devices 120. The duct may be configured to adjust a direction of dry air emitted through each of the forced air supply devices 120.

A signal for controlling each of the plurality of forced air supply devices 120 may be generated based on a value measured by the anemometer, the thermometer, or the hygrometer of each of the plurality of forced air supply devices 120. For example, a signal for controlling a heater installed in one of the dehumidifier 200 (see FIG. 1) and the plurality of air supply pipes 210 (see FIG. 1) may be generated based on a value measured by the thermometer of each of the plurality of forced air supply devices 120. As another example, a signal for controlling an output of one of the plurality of air supply fans 220 may be generated based on a value measured by the anemometer of each of the plurality of forced air supply devices 120. As another example, a signal for controlling an operation of the dehumidifier 200 (see FIG. 1) may be generated based on a value measured by the hygrometer of each of the plurality of forced air supply devices 120.

The above-described control signals may be generated based on negative feedback for ensuring that process parameters of the drying chamber 110 are within a normal range but are not limited thereto. The electric damper and the duct may be operated based on the above-described control signals and an additional control signal.

The plurality of exhaust ports 130 may be installed on the rear surface 110R. The rear surface 110R may be connected to the top surface 110T and the bottom surface 110B. The rear surface 110R may be interposed between the top surface 110T and the bottom surface 110B. The plurality of exhaust ports 130 may be closer to the top surface 110T than the bottom surface 110B. A distance d1 between each of the plurality of exhaust ports 130 and the top surface 110T may be less than a distance d2 between each of the plurality of exhaust ports 130 and the bottom surface 110B.

The plurality of passive air supply devices 140 may be installed on the front surface 110F. The front surface 110F may be opposite to the rear surface 110R. The front surface 110F may be interposed between the top surface 110T and the bottom surface 110B. Although not explicitly shown, the front surface 110F may include one or more doors for operators' operation. The operators' operation may include maintenance of inner elements of the drying chamber 110, loading and unloading of the electrode EL, stopping work when a warning signal occurs, etc.

Each of the first and second side surfaces 110S1 and 110S2 may be connected to the bottom surface 110B, the top surface 110T, the front surface 110F, and the rear surface 110R. Accordingly, the first and second side surfaces 110S1 and 110S2, the bottom surface 110B, the top surface 110T, the front surface 110F, and the rear surface 110R may form a closed space for the drying process.

The plurality of first rollers 151 and the plurality of second rollers 152 may be in the drying chamber 110. The plurality of first rollers 151 may be close to the bottom surface 110B, and the plurality of second rollers 152 may be close to the top surface 110T. Each of the plurality of first rollers 151 may be spaced apart from the top surface 110T with the plurality of second rollers 152 interposed therebetween. Each of the plurality of second rollers 152 may be spaced apart from the bottom surface 110B with the plurality of first rollers 151 interposed therebetween.

The first and second rollers 151 and 152 may be configured to support the electrode EL. The first and second rollers 151 and 152 may be configured to move the electrode EL. By rotating the first and second rollers 151 and 152, the electrode EL may be moved from the first side surface 110S1 to the second side surface 110S2 or from the second side surface 110S2 to the first side surface 110S1.

In the present example, the plurality of second rollers 152 may be interposed between the plurality of first rollers 151 in the Y-axis direction. Accordingly, a middle portion of the electrode EL in the drying chamber 110 may be elevated compared to an edge portion of the electrode EL. Here, the middle portion of the electrode EL is a portion of the electrode EL between the plurality of second rollers 152, and the edge portion of the electrode EL is a portion of the electrode EL between the plurality of first rollers 151 and the first and second side surfaces 110S1 and 110S2.

The Y-axis direction may be substantially parallel to a direction in which the middle portion and the edge portion of the electrode EL extend and thus may also be referred to as a direction of extension. In addition, the Y-axis direction may be substantially parallel to a direction in which the middle portion and the edge portion of the electrode EL are moved and thus may be referred to as a direction of movement of the electrode EL.

The X-axis direction may be substantially parallel to a width direction of the electrode EL and thus may be referred to as the width direction of the electrode EL. The Z-axis direction may be referred to as a height direction.

According to example embodiments, the forced air supply devices 120 may not overlap the electrode EL in the Z-axis direction. According to example embodiments, the forced air supply devices 120 may be spaced apart from the electrode EL in the X-axis direction. According to example embodiments, the forced air supply devices 120 may be interposed between the electrode EL and the front surface 110F in the X-axis direction. According to example embodiments, the forced air supply devices 120 may not overlap surfaces of the first and second rollers 151 and 152 that support the electrodes EL in the Z-axis direction. According to example embodiments, the forced air supply devices 120 may be spaced apart from the surfaces of the first and second rollers 151 and 152 that support the electrodes EL in the X-axis direction. According to example embodiments, the forced air supply devices 120 may be interposed between the surfaces of the first and second rollers 151 and 152 that support the electrodes EL and the front surface 110F in the X-axis direction. Accordingly, dry air introduced through the forced air supply devices 120 may be prevented from being directly sprayed to a certain portion of the electrode EL, and uniformity of the drying process may be improved.

In an experimental example, when the middle portion of the electrode EL loaded into the drying chamber 110 was elevated compared to the edge portion of the electrode EL, the forced air supply devices 120 was close to the top surface 110T of the drying chamber 110 and thus vortexes and turbulences decrease in the drying chamber 110. Furthermore, according to the experimental example, it was confirmed that an amount of water evaporation in the drying chamber 110 increased by about 30% compared to that in a conventional electrode drying equipment due to the provision of the above-described forced air supply devices 120. Accordingly, it was confirmed that the electrode drying equipment 100 and the electrode drying system 10 (see FIG. 1) including the same according to example embodiments contributed to improved uniformity and efficiency of the drying process.

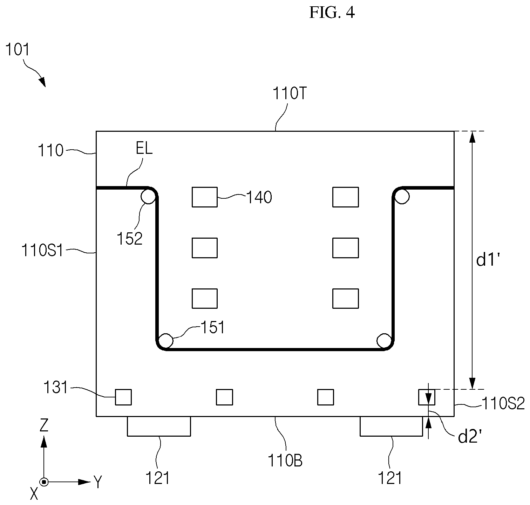

FIG. 4 is a diagram for describing an electrode drying equipment 101 according to other example embodiments. More specifically, FIG. 4 illustrates a part of the electrode drying equipment 101 corresponding to FIG. 2.

Referring to FIG. 4, the electrode drying equipment 101 may include a drying chamber 110, a plurality of forced air supply devices 121, a plurality of exhaust ports 131, a plurality of passive air supply devices 140, a plurality of first rollers 151 and a plurality of second rollers 152.

The drying chamber 110 and the plurality of passive air supply devices 140 are substantially the same as those described above with reference to FIG. 1 and thus a redundant description thereof is omitted here.

The plurality of forced air supply devices 121 may be installed on a bottom surface 110B. Each of the plurality of forced air supply devices 121 may include one of an anemometer, a thermometer, a hygrometer, an electric damper, and a duct. Operations and functions of the anemometer, the thermometer, the hygrometer, the electric damper, and the duct are substantially the same as those described above with reference to FIGS. 2 and 3.

The plurality of exhaust ports 131 may be installed on a rear surface 110R. The plurality of exhaust ports 131 may be closer to the bottom surface 110B than the top surface 110T. A distance d1' between each of the plurality of exhaust ports 131 and the top surface 110T may be greater than a distance d2' between each of the plurality of exhaust ports 131 and the bottom surface 110B.

In the present example, in contrast to that shown in FIG. 2, the plurality of first rollers 151 may be interposed between the plurality of second rollers 152 in the Y-axis direction. Accordingly, an edge of an electrode EL in the drying chamber 110 may be elevated compared to a middle portion of the electrode EL. Here, the middle portion of the electrode EL is a portion of the electrode EL between the plurality of first rollers 151, and the edge portion of the electrode EL is a portion of the electrode EL between the plurality of second rollers 152 and the first and second side surfaces 110S1 and 110S2.

According to example embodiments, the forced air supply devices 121 may not overlap the electrode EL in the Z-axis direction. According to example embodiments, the forced air supply devices 121 may be spaced apart from the electrode EL in the X-axis direction. According to example embodiments, the forced air supply devices 121 may be interposed between the electrode EL and the front surface 110F in the X-axis direction. According to example embodiments, the forced air supply devices 121 may not overlap surfaces of the first and second rollers 151 and 152 that support the electrodes EL in the Z-axis direction. According to example embodiments, the forced air supply devices 121 may be spaced apart from the surfaces of the first and second rollers 151 and 152 that support the electrodes EL in the X-axis direction. According to example embodiments, the forced air supply devices 121 may be interposed between the surfaces of the first and second rollers 151 and 152 that support the electrodes EL and the front surface 110F in the X-axis direction. Accordingly, dry air introduced through the forced air supply devices 121 may be prevented from being directly sprayed to the electrode EL, and uniformity of the drying process may be improved.

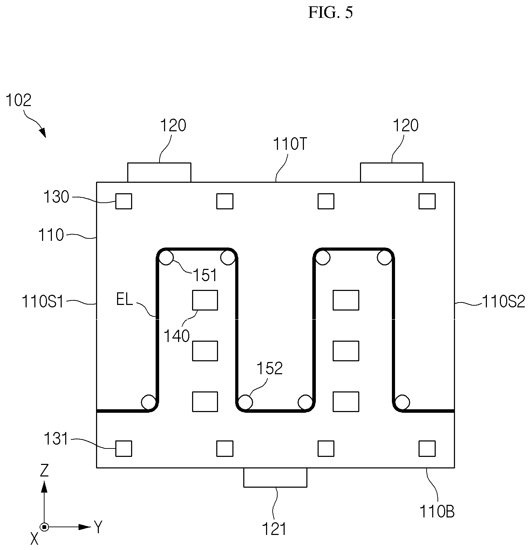

FIG. 5 is a diagram for describing an electrode drying equipment 102 according to other example embodiments. More specifically, FIG. 5 illustrates a part of the electrode drying equipment 102 corresponding to FIG. 2.

Referring to FIG. 5, the electrode drying equipment 102 may include a drying chamber 110, a plurality of forced air supply devices 120 and 121, a plurality of exhaust ports 130 and 131, a plurality of passive air supply devices 140, a plurality of first rollers 151 and a plurality of second rollers 152.

The drying chamber 110 and the plurality of passive air supply devices 140 are substantially the same as those described above with reference to FIG. 1 and thus a redundant description thereof is omitted here.

The forced air supply devices 120 may be installed on a top surface 110T, and the forced air supply devices 121 may be installed on a bottom surface 110B. For convenience of description, FIG. 5 illustrates that two forced air supply devices 120 are installed on the top surface 110T and one forced air supply device 121 is installed on the bottom surface 110B, and the number and arrangement of forced air supply devices 120 and the number of arrangement of forced air supply devices 121 may be changed as necessary.

The forced air supply devices 120 and the exhaust ports 130 are substantially the same as those described above with reference to FIGS. 1 to 3, and the forced air supply devices 121 and the exhaust ports 131 are substantially the same as those described above with reference to FIG. 4.

The plurality of exhaust ports 139 and 131 may be installed on a rear surface 110R. The exhaust ports 130 may be closer to the top surface 110T than the bottom surface 110B. The exhaust ports 131 may be closer to the bottom surface 110B than the top surface 110T.

At least two second rollers 152 may be interposed between two neighboring ones of the first rollers 151, and at least two first rollers 151 may be interposed between two neighboring ones of the second rollers 152. Accordingly, in the present embodiment, a pass line of an electrode EL may have a zigzag shape unlike in the embodiments of FIGS. 2 and 4. As described above, the electrode EL may be moved by rotation of the first and second rollers 151 and 152, and the pass line may be a moving path of the electrode EL.

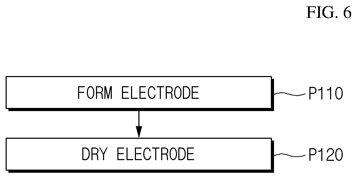

FIG. 6 is a flowchart of a method of manufacturing an electrode according to example embodiments.

According to example embodiments, in P110, an electrode may be formed.

A sheet type electrode may be formed by applying an electrode slurry containing an electrode active material on a current collector, and drying and roll-pressing the electrode slurry to form an electrode mixture layer. The electrode slurry may be applied on the current collector by a coating die. The coating die may be, for example, a slot die. The current collector may be a positive electrode current collector or a negative electrode current collector, and the electrode active material may be a positive electrode active material or a negative electrode active material. The electrode slurry may include a conductive material and a binder, as well as the electrode active material.

A thickness of the positive electrode current collector may range from about 3 µm to about 500 µm. The positive electrode current collector may not cause a chemical change in a finally manufactured secondary battery and may have high conductivity. The positive electrode current collector may include, for example, stainless steel, nickel, titanium, baked carbon, and aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of film, sheet, foil, net, porosity, foam, nonwoven fabric or the like.

A thickness of the negative electrode current collector may be in a range of about 3 µm to about 500 µm. The negative electrode current collector may not cause a chemical change in a finally manufactured secondary battery and may have high conductivity. The negative electrode current collector may include stainless steel, aluminum, nickel, titanium, baked carbon, and aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of film, sheet, foil, net, porosity, foam, nonwoven fabric or the like.

The positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+zN}i_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

For example, the negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

Generally, the conductive material accounts for about 1% to about 30% by weight in a mixture containing the cathode active material. The conductive material may not cause a chemical change in a finally manufactured secondary battery and may have conductivity. For example, the conductive material may include: graphite such as natural graphite or artificial graphite; carbon black such as acetylene black, Ketjen black, channel black, furnace black, lamp black or summer black; conductive fibers such as carbon fibers or metal fibers; metal powder such as carbon fluoride, aluminum or nickel powder; conductive whiskey such as zinc oxide or potassium titanate; conductive metal oxide such as titanium oxide; polyphenylene derivatives, or the like.

The binder may enhance a binding force between the active material and the conductive material and a binding force of the current collector. The binder accounts for about 1% to about 30% by weight in the mixture containing the positive electrode active material. The binder may include, for example, polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-propylene-diene ter polymer (EPDM), sulfonated EPDM, styrene-butyrene rubber, fluorine rubber, various copolymers, or the like.

The electrode slurry may be prepared by dissolving the electrode active material, the conductive material, the binder, etc. in a solvent. The solvent may disperse the electrode active material and the like. The solvent may be an aqueous solvent or a non-aqueous solvent. The solvent may include dimethyl sulfoxide (DMSO), isopropyl alcohol, N-methylpyrrolidone (NMP), acetone, water or a mixture thereof. The amount of the solvent to be used may be adjusted such that the slurry has an appropriate viscosity in consideration of a coating thickness, a preparation yield, workability, etc. of the slurry.

Referring to FIGS. 1 and 6, the electrode EL may be dried using the electrode drying system 10. The electrode EL may be dried by a method that is substantially the same as the method described above with reference to FIGS. 1 to 3 and a redundant description thereof is omitted here.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. An electrode drying system comprising:
an electrode drying equipment configured to dry an electrode, and including a drying chamber, a plurality of forced air supply devices on a top surface of the drying chamber, and a plurality of exhaust ports on a rear surface of the drying chamber;
a dehumidifier connected to the plurality of forced air supply devices, and configured to generate dry air to be provided to the drying chamber through the plurality of forced air supply devices.

2. The electrode drying system of claim 1, wherein the dry air generated by the dehumidifier is directly provided to the forced air supply devices.

3. The electrode drying system of claim 1, further comprising a plurality of air supply pipes connected to the dehumidifier,
wherein each of the plurality of air supply pipes is connected to corresponding one among the plurality of forced air supply devices.

4. The electrode drying system of claim 3, further comprising a plurality of air supply fans each installed in one of the plurality of air supply pipes,
wherein each of the plurality of air supply fans is configured to provide a driving force for delivering the dry air through one of the plurality of air supply pipes.

5. The electrode drying system of claim 1, wherein the electrode drying equipment further includes a plurality of first rollers and a plurality of second rollers in the drying chamber and configured to support the electrode,
wherein each of the plurality of first rollers is spaced apart from the top surface of the drying chamber with the plurality of second rollers interposed therebetween.

6. The electrode drying system of claim 5, wherein the plurality of second rollers are interposed between the plurality of first rollers in a direction in which the electrode extends.

7. The electrode drying system of claim 5, wherein the plurality of first rollers and the plurality of second rollers are configured to support the electrode to elevate a middle portion of the electrode compared to an edge portion of the electrode.

8. The electrode drying system of claim 1, wherein the drying chamber further includes a bottom surface opposite to the top surface of the drying chamber, and
a distance between each of the plurality of exhaust ports and the top surface of the drying chamber is less than a distance between each of the plurality of exhaust ports and the bottom surface of the drying chamber.

9. The electrode drying system of claim 1, wherein each of the plurality of forced air supply devices does not overlap the electrode in a direction perpendicular to the top surface of the drying chamber.

10. The electrode drying system of claim 1, wherein each of the plurality of forced air supply devices is interposed between the electrode and a front surface of the drying chamber,
wherein the front surface of the drying chamber is opposite to the rear surface of the drying chamber.

11. The electrode drying system of claim 1, wherein each of the plurality of forced air supply devices includes an anemometer, a thermometer, a hygrometer electric damper, or a duct.

12. The electrode drying system of claim 1, further comprising a plurality of passive air supply devices on a front surface of the drying chamber,
wherein the front surface of the drying chamber is opposite to the rear surface of the drying chamber.

13. The electrode drying system of claim 12, wherein each of the passive air supply devices is not connected to the dehumidifier.

14. An electrode drying equipment comprising:
a drying chamber;
a plurality of forced air supply devices on a top surface of the drying chamber; and
a plurality of exhaust ports on a rear surface of the drying chamber,
wherein each of the plurality of forced air supply devices is spaced apart from an electrode loaded in the drying chamber in a direction parallel to the top surface of the drying chamber.

15. The electrode drying equipment of claim 14, wherein each of the plurality of air supply devices does not overlap the electrode.

16. The electrode drying equipment of claim 14, wherein a distance between each of the plurality of forced air supply devices and a front surface of the drying chamber is less than a distance between each of the plurality of air supply devices and the rear surface of the drying chamber,
wherein the front surface of the drying chamber is opposite to the rear surface of the drying chamber.

17. The electrode drying equipment of claim 16, wherein each of the plurality of forced air supply devices is interposed between the electrode and the front surface of the drying chamber in a first direction parallel to the top surface of the drying chamber.

18. The electrode drying equipment of claim 16, further comprising a plurality of passive air supply devices configured to supply dry air to the drying chamber,
wherein the plurality of passive air supply devices are on the front surface of the drying chamber.

19. The electrode drying equipment of claim 18, wherein the forced air supply devices are directly connected to a dehumidifier, which is configured to generate dry air, through an air supply pipe.

20. The electrode drying equipment of claim 19, wherein the passive air supply devices are not connected to the dehumidifier.

21. The electrode drying equipment of claim 14, wherein a distance between each of the plurality of exhaust ports and the top surface of the drying chamber is less than a distance between each of the plurality of exhaust ports and a bottom surface of the drying chamber,
wherein the bottom surface of the drying chamber is opposite to the top surface of the drying chamber.

22. An electrode drying equipment comprising:
a drying chamber;
a plurality of forced air supply devices on a bottom surface of the drying chamber; and
a plurality of exhaust ports on a rear surface of the drying chamber,
wherein each of the plurality of forced air supply devices is spaced apart from an electrode loaded in the drying chamber in a direction parallel to the bottom surface of the drying chamber.

23. The electrode drying equipment of claim 22, wherein a distance between each of the plurality of forced air supply devices and a front surface of the drying chamber is less than a distance between each of the plurality of air supply devices and the rear surface of the drying chamber,
wherein the front surface of the drying chamber is opposite to the rear surface of the drying chamber.

24. The electrode drying equipment of claim 23, wherein each of the plurality of forced air supply devices is interposed between the electrode and the front surface of the drying chamber in a first direction parallel to the rear surface of the drying chamber.

25. The electrode drying equipment of claim 23, further comprising a plurality of passive air supply devices configured to supply dry air to the drying chamber,
wherein the plurality of passive air supply devices are on the front surface of the drying chamber.

26. The electrode drying equipment of claim 25, wherein the forced air supply devices are directly connected to a dehumidifier, which is configured to generate dry air, through an air supply pipe.

27. The electrode drying equipment of claim 26, wherein the passive air supply devices are not connected to the dehumidifier.

28. The electrode drying equipment of claim 22, wherein a distance between each of the plurality of exhaust ports and the bottom surface of the drying chamber is less than a distance between each of the plurality of exhaust ports and a top surface of the drying chamber,
wherein the top surface of the drying chamber is opposite to the bottom surface of the drying chamber.
